# EUROPEAN PATENT SPECIFICATION

(11) **EP 3 636 069 B1**
(45) Date of publication and mention of the grant of the patent: **30.10.2024**
(21) Application number: 18425078.5
(22) Date of filing: 10.10.2018
(51) Int. Cl.: A01K 1/00

(54) **GUTTER FOR AN EVAPORATIVE PAD OF A COOLING SYSTEM**
RINNE FÜR EIN VERDUNSTUNGSKISSEN EINES KÜHLSYSTEMS
GOUTTIÈRE POUR UN TAMPON D'ÉVAPORATION D'UN SYSTÈME DE REFROIDISSEMENT

(43) Date of publication of application: 15.04.2020
(73) Proprietor: Munters Italy S.p.A., 18027 Chiusavecchia (IM) (IT)
(72) Inventor: Pal-Calinescu, Andrei, 18027 Chiusavecchia (Imperia) (IT); Trifoglio, Fabrizio, 18027 Chiusavecchia (Imperia) (IT); Revetria, Andrea, 18027 Chiusavecchia (Imperia) (IT); Brambilla, Fulvio, 18027 Chiusavecchia (Imperia) (IT)
(74) Representative: Zacco Sweden AB

(56) References cited:
- DE-U1- 29 908 553
- FR-A- 682 616
- US-A- 3 841 101
- US-A1- 2007 163 280

## Description

The present invention refers in general to evaporative cooling systems, used, for example, for livestock and greenhouse facilities.

Such systems use water evaporation to cool the air that is circulated inside a barn or greenhouse by means of aeration systems. For this purpose, water-impregnated evaporative panels are used, which are arranged in openings made in the walls of the building and are made to be penetrated by a flow of air generated by an aeration system. The water in the panel evaporates, extracting heat from the surrounding air, and therefore the hot, dry air from the outside enters the cooler, more humid building. The water that does not evaporate, dripping downwards by gravity, collects in a gutter located below the panel, from which the water is drawn up by a pump and fed back to the distribution apparatus.

Evaporative panels generally are relatively large structures and are thus made by joining several elements together in order to cover the desired areas. In particular, the collection gutters are made by joining several consecutive elements in order to cover the entire width of the panel. The assembly generally takes place on site and provides for fixing and sealing the various elements of the gutter to each other. The fixing and sealing operation is carried out manually, and therefore the final result, in terms of sealing the gutter, depends on the skills of the operator. Moreover, it is also a time-consuming and resource-intensive process.

US 3 841 101 A discloses a gutter having the features of the preamble of claim 1, which is however not suitable for evaporative cooling systems. DE 299 08 553 U1 discloses a joint which is used for fixing a repair piece to a gutter. FR 682 616 A discloses a joint allowing two gutter elements to be assembled in an overlapping relationship.

One object of the present invention is to make available a gutter for an evaporative panel of a cooling system that can overcome at least in part the aforementioned drawbacks.

According to the invention, there is provided a gutter for an evaporative panel of a cooling system according to claim 1. Such a gutter comprises
at least one channel element comprising a bottom wall and a pair of opposing side walls extending from the bottom wall and ending at the respective top edges of the channel element, and
at least one joint configured to connect one end of the channel element to another component of the evaporative panel, the joint comprising
   - an outer part configured to be coupled to an outer surface of the channel element and provided with a pair of flanges suitable to be arranged at the respective top edges of the channel element,
   - an inner part configured to be coupled to an inner surface of the channel element and fitted with a pair of flanges suitable to be arranged at the respective top edges of the channel element,
   - at least one gasket suitable to be interposed between the inner part of the joint and the inner surface of the channel element, and
   - clamping means acting on the flanges to clamp the end of the channel element between the inner part and outer part of the joint,
wherein the outer part of the joint has a seat in the shape of a saddle, suitable to receive the end of the channel element, and the inner part of the joint comprises a corresponding bottom portion and a pair of opposing side portions extending from the bottom portion,
wherein in the seat of the outer part of the joint a partition is made, extending transversely inwards, said partition defining a reference position for the end of the channel element,
wherein on the inner part of the joint at least one bridge portion is made, extending between the side portions of the inner part, wherein said at least one bridge portion comprises an upper bridge portion made as a grid and serving as a support for a panel element of the evaporative panel.

Preferred embodiments of the invention are defined in the dependent claims, which are intended as an integral part of the present description.

In a gutter according to the invention, the attachment of a channel element of the gutter to another component, such as another channel element or an end cap of the gutter, is achieved by means of a joint that may also ensure a seal between the elements. The joint thus facilitates assembly and sealing operations, for which the same level of expertise is not required as for conventional gutters. Moreover, assembly times are comparatively short.

Further features and advantages of the gutter according to the invention will become more apparent in the following detailed description of an embodiment of the invention, made with reference to the accompanying drawings, provided purely to be illustrative and non-limiting, wherein:
- figure 1 is a perspective view of a cooling system with evaporative panel;
- figure 2 is an enlarged scale view of a detail of the system;
- figure 3 is a cross-sectional view taken at a joint; and
- figures 4 and 5 are exploded views of the joint.

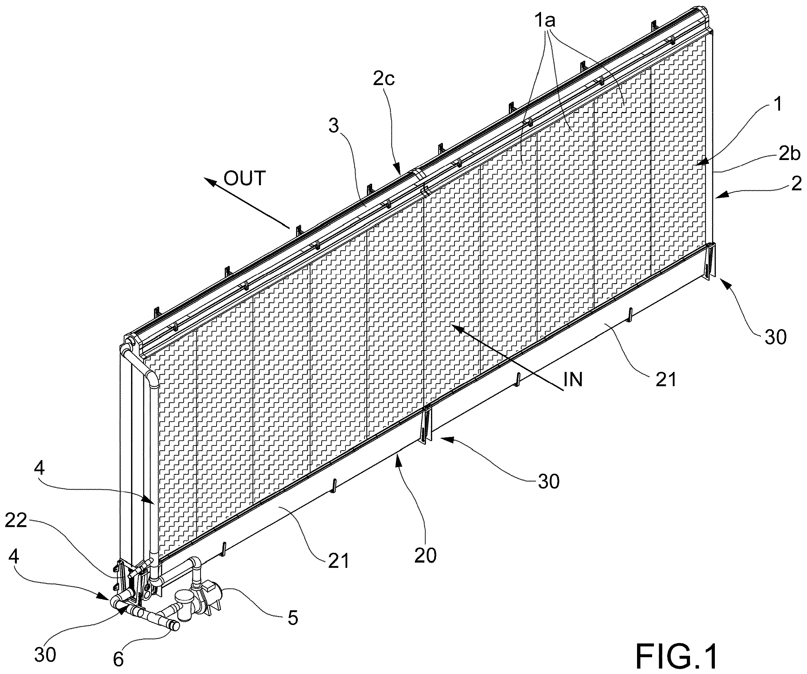

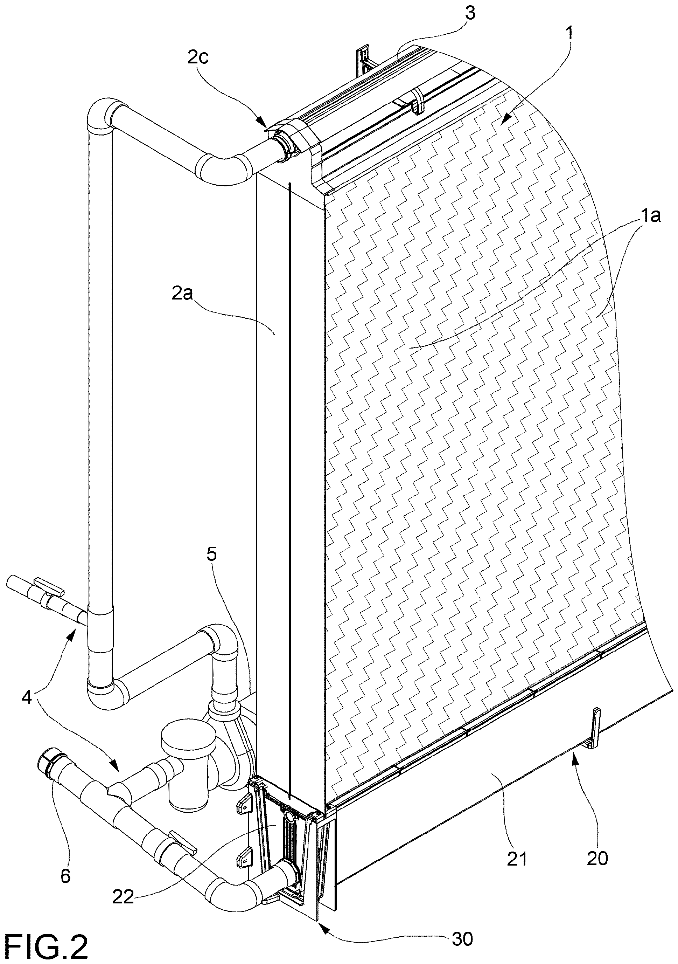

With reference to figures 1 and 2, an evaporative cooling system is represented. The system comprises an evaporative panel 1, formed by a plurality of panel elements 1a placed side by side and supported by a structure 2 that surrounds the panel 1. The elements of panel 1a are made of material chosen and configured in such a way as to allow, on the one hand, for them to be impregnated with water, and, on the other, for the air to pass through them. The direction of the air flow is represented by the IN and OUT arrows in figure 1.

The structure 2 comprises two side panels, 2a and 2b, between which the evaporative panel 1 is laterally contained. An upper part 2c, in which a distribution apparatus 3 is arranged, is constructed as a pipe that extends along the entire width of the panel 1 and equipped with a plurality of spray nozzles or other dispensing members (not shown) distributed along the pipe so as to spray the panel with water as evenly as possible.

The structure 2 further comprises a lower part 20 constructed as a gutter, and suitable to collect the water that drips by gravity from the panel 1.

The gutter 20 is conventionally connected to the distribution apparatus 3 by means of a recirculation pipe 4, comprising a pump 5 to draw the water from the gutter 20 and to feed it to the distribution apparatus 3.

The description of the aforesaid evaporative system is intended simply to frame the scope of the present invention and is therefore not to be considered binding.

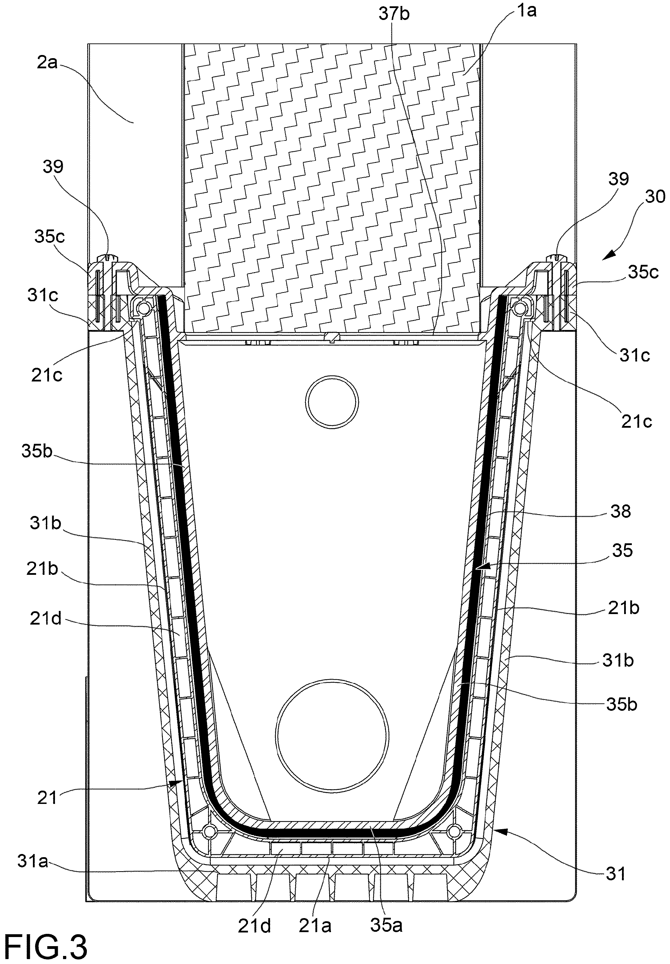

With particular reference to figures 3 to 5, the gutter 20 comprises a plurality of consecutive channel elements 21. Each end of each channel element 21 is sealingly connected to one end of an adjacent channel element 21, or to another component of the panel, in particular an end cap of the gutter 21. Figures 1 and 2 show one of such end caps, indicated at 22, on which is arranged a fitting for connecting the gutter 21 to the recirculation pipe 4.

Each channel element 21 is made in a single piece, in particular, of plastic material, but could be made of other materials, such as metallic materials. In the example shown, the channel elements 21 have an approximately trapezoidal cross section. Such shape is not, however, essential to the invention and may be different, e.g. semicircular, parabolic or semi-elliptical, or more generally it may also have a non-symmetrical shape. Each channel element 21 consists of a bottom wall 21a and a pair of side walls 21b opposite each other that extend from the bottom wall 21a and end in respective top edges 21c of the channel element 21. As may be seen in particular in figure 3, each wall 21a and 21b is preferably constructed as a double wall with a cavity 21d inside. Such configuration is advantageous because it provides a double barrier that prevents water leaks to the outside in the event of cracks forming on the inside of the double wall.

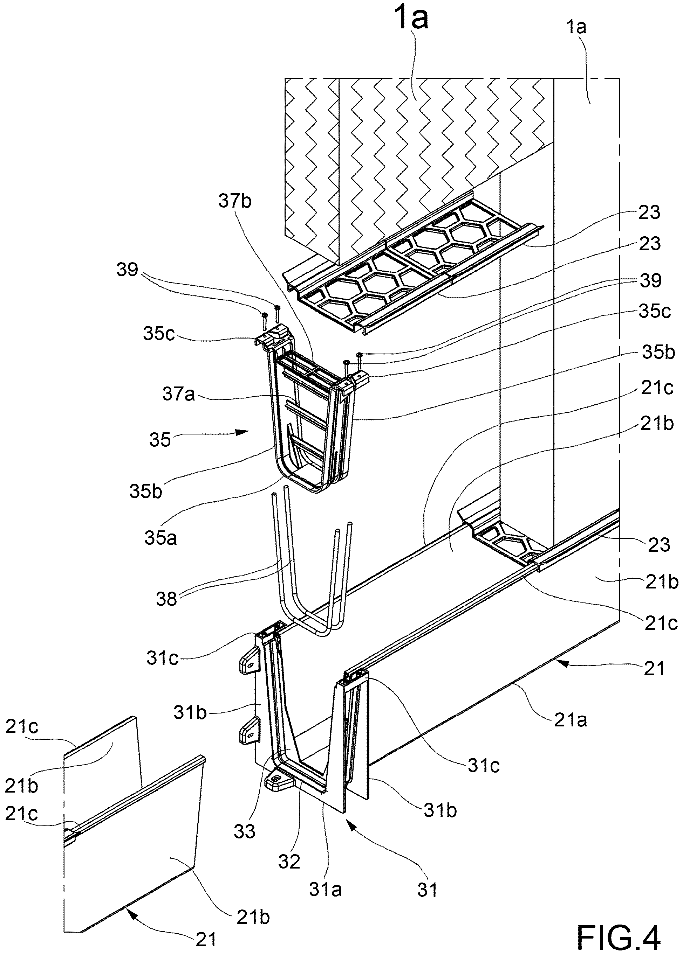

As shown in figure 4, a series of consecutive grid elements 23 is arranged along the gutter 20, which rest on the top edges 21c of each channel element 21 and act as a support for the panel elements 1a, while at the same time allowing the water dripping from the panel elements 1a to collect in the gutter 20.

The sealed connection between the channel elements 21, and between the channel elements 21 and the end caps 22, is made by means of joints 30.

Each joint 30 comprises an outer part 31 formed as a single piece, in particular, made of plastic (or other materials), which is configured to be coupled to the outer surface of the channel element 21. Consequently, the outer part 31 of the joint has a shape that matches the cross-sectional profile of the outer surface of the channel element 21. The outer part 31 of the joint comprises a base portion 31a, which may be placed on a surface, and a pair of opposing side portions 31b that extend from the base portion 31a. At the top ends thereof, the side portions 31b end with their respective flanges 31c that extend laterally outwards. As may be seen in figure 3, in use, the flanges 31c are arranged at the respective top edges 21c of the channel element 21.

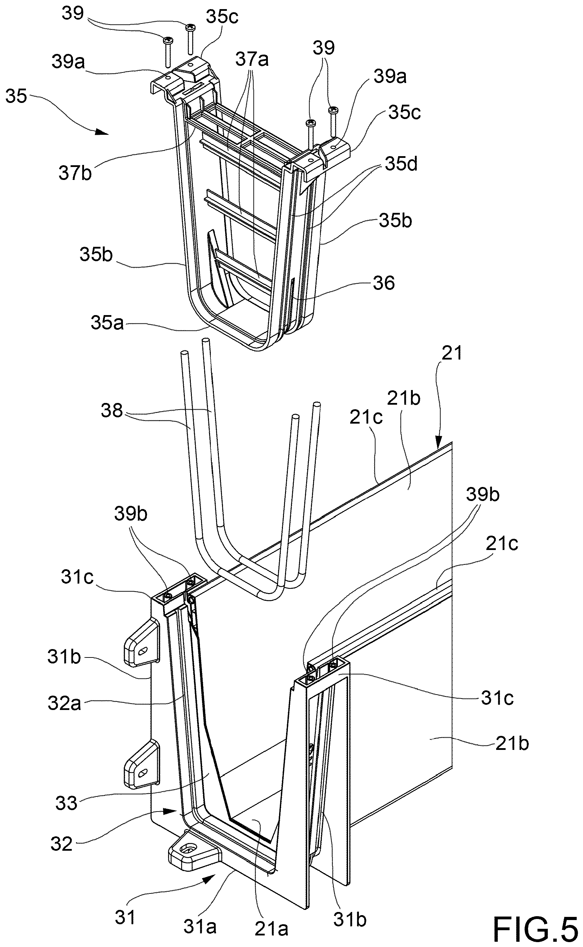

As may be seen in particular in figures 4 and 5, the outer part 31 of the joint 30 has a seat 32 in the shape of a saddle, defined by the inner surfaces of the base portion 31a and the side portions 31b of the outer part 31. The seat 32 is suitable to receive the end of a respective channel element 21. The outer part 31, and in general the whole joint 30, may have reflective symmetry with respect to a median plane, so as to allow the coupling of two gutter elements 21 arranged head to head with a single joint 30 (the term "median" is understood to refer to the direction defined by the longitudinal axis of the channel element 21). The following description refers to only one of the symmetrical halves of the joint 30, but it is intended that the features described concern both halves. However, the invention is not limited to the symmetrical example described herein, as the joint may also have a non-symmetrical shape.

In the seat 32 of the outer part 31 of the joint 30, a partition 33 is preferably made, extending transversely inwards, arranged in particular at the median plane of the joint 30. The partition 33 defines a reference position, and possible abutment, for the end of the channel element 21 (and therefore, on opposite sides, for the ends of two channel elements 21 placed head to head). In this regard, it may be provided that the end of the channel element 21 must be placed at a certain axial distance from the partition 33, so as to have play that may compensate for the thermal expansion of the components that may occur in use.

In the seat 32 of the outer part 31 of the joint 30 a groove 32a may be obtained suitable to receive a possible gasket (not illustrated) to be interposed between the outer part 31 of the joint 30 and the outer surface of the channel element 21. According to other embodiments, there may be more than one gasket between the outer part 31 of the joint 30 and the outer surface of the channel element 21. Depending on other embodiments, the gasket(s) may be co-molded on the outer part 31 of the joint 30.

Each joint 30 comprises moreover an inner part 35 formed as a single piece, in particular, made of plastic (or other materials), which is configured to be coupled to the inner surface of the channel element 21. Consequently, the inner part 35 of the joint has a shape that matches the cross-sectional profile of the outer surface of the channel element 21. The inner part 35 of the joint 30 has a saddle shape and comprises a bottom portion 35a and a pair of opposing side portions 35b that extend from the bottom portion 35a. At the top ends thereof, the side portions 35b end with their respective flanges 35c extending laterally outwards. As may be seen in figure 3, in use, the flanges 35c of the inner part 35 of the joint 30 are arranged at the respective top edges 21c of the channel element 21 and are superimposed on the flanges 31c of the outer part 31 of the joint 30.

By virtue of the arrangement described above, in use, the end of the channel element 21 is sandwiched between the outer part 31 and the inner part 35 of the joint 30.

On each of the flanges 35c of the inner part 35 of the joint 30, there is a pair of inspection through-slits 35e, each of which in use is located above the top edge 21c of the end of the respective channel element 21. The inspection through-slits 35e are used to allow users to monitor, by observing through the slits 35e when the joint is closed, the positioning of the end of the channel element 21 with respect to the partition 33 made on the outer part 31 of the joint 30. For this purpose, it may be provided that each slit 35e is sized in length in such a way as to provide visual feedback regarding the positioning of the end of the channel element. In this case, it may be envisaged that, if the end of the channel element 21 is positioned too far from partition 33, then the slit 35e is "empty" inasmuch as, according to a plan view, there is no overlap between the slit 35e and the end of the channel element 21. Conversely, if the end of the channel element 21 comes into contact with the partition 33 due to incorrect positioning or thermal expansion of the channel element 21, then the slit 35e is "full" inasmuch as, according to a plan view, there is a total overlap between the slit 35e and the end of the channel element 21.

On the outer side of the inner part 35 of the joint 30, a slit 36 is preferably made to receive the partition 33 of the outer part 31 of the joint 30. Moreover, on the inner part 35 of the joint 30, one or more bridge portions 37a, 37b are made, extending between the side portions 35b of the inner part 35. Some of the bridge portions, indicated at 37a, serve to stiffen the inner part 35 of the joint 30 and to prevent the side portions 35b from flexing inwards in use, which would result in a loss of effectiveness of the compressive action of the inner part 35 of the joint 30 on the inner surface of the channel element 21. The upper bridge portion, indicated at 37b, is made as a grid and serves as a support for the overhanging panel element 1a.

On the outer side of the inner part 35 of the joint 30, a groove 35d may be obtained suitable to receive a respective gasket 38 to be interposed between the outer part 31 of the joint 30 and the outer surface of the channel element 21. According to further embodiments, there may be more than one gasket between the inner part 35 of the joint 30 and the inner surface of the channel element 21. According to other embodiments, the gasket(s) may be co-molded on the inner part 35 of the joint 30.

The joint 31 further comprises clamping devices 39 acting on the flanges 35c and 31c to clamp the end of the channel element 21 between the inner part 35 and outer part 31 of the joint 30. In the example shown, the clamping devices 39 are made as screws that are inserted into holes 39a made in the flanges 35c on the inner part 35 of the joint 30 and coupled to threaded holes 39b made in the flanges 31c on the outer part 31 of the joint 30. Clamping devices 39 may have other configurations. For example, they could be made as snap-on devices, or as clips or clamps that embrace and fasten the flanges 35c and 31c together.

## Claims

1. A gutter (20) for an evaporative panel (1) of a cooling system, comprising
at least one channel element (21) comprising a bottom wall (21a) and a pair of opposing side walls (21b) extending from the bottom wall (21a) and ending at the respective top edges (21c) of the channel element (21), and
at least one joint (30) configured to sealingly connect one end of the channel element (21) to another component of the evaporative panel (1), the joint (30) comprising
- - an outer part (31) configured to be coupled to an outer surface of the channel element (21) and provided with a pair of flanges (31c) suitable to be arranged at the respective top edges (21c) of the channel element (21),
- - an inner part (35) configured to be coupled to an inner surface of the channel element (21) and provided with a pair of flanges (35c) suitable to be arranged at the respective top edges (21c) of the channel element (21),
- at least one gasket (38) suitable to be interposed between the inner part (35) of the joint (30) and the inner surface of the channel element (21), and
- clamping means (39) acting on the flanges (35c, 31c) to clamp the end of the channel element (21) between the inner part (35) and outer part (31) of the joint (30),
wherein the outer part (31) of the joint (30) has a seat (32) in the shape of a saddle, suitable to receive the end of the channel element (21), and the inner part (35) of the joint (30) comprises a corresponding bottom portion (35a) and a pair of opposing side portions (35b) extending from the bottom portion (35a),
wherein in the seat (32) of the outer part (31) of the joint (30) a partition (33) is made, extending transversely inwards, said partition defining a reference position for the end of the channel element (21),
said gutter being **characterized in that** on the inner part (35) of the joint (30) a plurality of bridge portions (37a, 37b) are made, extending between the side portions (35b) of the inner part (35), wherein said bridge portions comprise a bridge portion (37a) and an upper bridge portion (37b), said upper bridge portion (37b) being made as a grid and serving as a support for a panel element (1a) of the evaporative panel (1).

2. A gutter according to claim 1, further comprising at least one gasket suitable to be interposed between the outer part (31) of the joint (30) and the outer surface of the channel element (21).

3. A gutter according to claim 1 or 2, wherein, on each flange (35c) of the inner part (35) of the joint (30), an inspection through-slit (35e) is made, suitable to be placed above the respective top edge (21c) of the channel element (21) to provide visual confirmation of the positioning of the end of the channel element (21) with respect to the partition (33).

4. A gutter according to one of the preceding claims, wherein the joint (30) has reflective symmetry with respect to a median plane.

5. A gutter according to one of the preceding claims, wherein the walls (21a, 21b) of the channel element (21) are made as double walls.

6. A gutter according to one of the preceding claims, further comprising a series of consecutive grid elements (23) arranged along the gutter (20) and resting on top edges (21c) of the at least one channel element (21), said grid elements acting as a support for a panel element (1a) of the evaporative panel (1).

## Patentansprüche

1. Rinne (20) für eine Verdunstungsplatte (1) eines Kühlsystems, umfassend
mindestens ein Kanalelement (21), umfassend eine Bodenwand (21a) und ein Paar gegenüberliegender Seitenwände (21b), die sich von der Bodenwand (21a) erstrecken und an den jeweiligen Oberkanten (21c) des Kanalelements (21) enden, und
mindestens eine Verbindung (30), die dazu konfiguriert ist, ein Ende des Kanalelements (21) abdichtend mit einer anderen Komponente der Verdunstungsplatte (1) zu verbinden, wobei die Verbindung (30) Folgendes umfasst
- - einen Außenteil (31), der dazu konfiguriert ist, mit einer äußeren Oberfläche des Kanalelements (21) gekoppelt zu sein, und der mit einem Paar Flansche (31c), die dazu geeignet sind, an den jeweiligen Oberkanten (21c) des Kanalelements (21) angeordnet zu sein, bereitgestellt ist,
- - einen Innenteil (35), der dazu konfiguriert ist, mit einer inneren Oberfläche des Kanalelements (21) gekoppelt zu sein, und der mit einem Paar Flansche (35c), die dazu geeignet sind, an den jeweiligen Oberkanten (21c) des Kanalelements (21) angeordnet zu sein, bereitgestellt ist,
- mindestens eine Dichtung (38), die dazu geeignet ist, zwischen dem Innenteil (35) der Verbindung (30) und der inneren Oberfläche des Kanalelements (21) befindlich zu sein, und
- Klemmmittel (39), die auf die Flansche (35c, 31c) einwirken, um das Ende des Kanalelements (21) zwischen dem Innenteil (35) und dem Außenteil (31) der Verbindung (30) festzuklemmen,
wobei der Außenteil (31) der Verbindung (30) einen Sitz (32) in Form eines Sattels aufweist, der zum Aufnehmen des Endes des Kanalelements (21) geeignet ist, und der Innenteil (35) der Verbindung (30) einen entsprechenden Bodenabschnitt (35a) und ein Paar gegenüberliegender Seitenabschnitte (35b), die sich von dem Bodenabschnitt (35a) erstrecken, umfasst,
wobei in dem Sitz (32) des Außenteils (31) der Verbindung (30) eine Trennwand (33) ausgebildet ist, die sich quer nach innen erstreckt, wobei die Trennwand eine Referenzposition für das Ende des Kanalelements (21) definiert,
wobei die Rinne **dadurch gekennzeichnet ist, dass** an dem Innenteil (35) der Verbindung (30) eine Vielzahl von Brückenabschnitten (37a, 37b) ausgebildet ist, die sich zwischen den Seitenabschnitten (35b) des Innenteils (35) erstrecken, wobei die Brückenabschnitte einen Brückenabschnitt (37a) und einen oberen Brückenabschnitt (37b) umfassen, wobei der obere Brückenabschnitt (37b) als Gitter ausgebildet ist und als Stütze für ein Plattenelement (1a) der Verdunstungsplatte (1) dient.

2. Rinne nach Anspruch 1, ferner umfassend mindestens eine Dichtung, die dazu geeignet ist, zwischen dem Außenteil (31) der Verbindung (30) und der äußeren Oberfläche des Kanalelements (21) befindlich zu sein.

3. Rinne nach Anspruch 1 oder 2, wobei auf jedem der Flansche (35c) des Innenteils (35) der Verbindung (30) ein Inspektionsdurchgangsschlitz (35e) ausgebildet ist, der dazu geeignet ist, über der jeweiligen Oberkante (21c) des Kanalelements (21) angeordnet zu sein, um eine visuelle Bestätigung der Positionierung des Endes des Kanalelements (21) in Bezug auf die Trennwand (33) bereitzustellen.

4. Rinne nach einem der vorhergehenden Ansprüche, wobei die Verbindung (30) eine Spiegelsymmetrie in Bezug auf eine Medianebene aufweist.

5. Rinne nach einem der vorhergehenden Ansprüche, wobei die Wände (21a, 21b) des Kanalelements (21) doppelwandig ausgebildet sind.

6. Rinne nach einem der vorhergehenden Ansprüche, ferner umfassend eine Reihe von leitenden Gitterelementen (23), die entlang der Rinne (20) angeordnet sind und auf den Oberkanten (21c) des mindestens einen Kanalelements (21) aufliegen, wobei die Gitterelemente als Stütze für ein Plattenelement (1a) der Verdunstungsplatte (1) fungieren.

## Revendications

1. Gouttière (20) pour un panneau d'évaporation (1) d'un système de refroidissement, comprenant
au moins un élément de canal (21) comprenant une paroi inférieure (21a) et une paire de parois latérales opposées (21b) s'étendant à partir de la paroi inférieure (21a) et se terminant au niveau des bords supérieurs respectifs (21c) de l'élément de canal (21), et
au moins un joint (30) configuré pour connecter de manière étanche une extrémité de l'élément de canal (21) à un autre composant du panneau d'évaporation (1), le joint (30) comprenant
- - une partie externe (31) configurée pour être couplée à une surface externe de l'élément de canal (21) et pourvue d'une paire de brides (31c) adaptées pour être agencées au niveau des bords supérieurs respectifs (21c) de l'élément de canal (21),
- - une partie interne (35) configurée pour être couplée à une surface interne de l'élément de canal (21) et pourvue d'une paire de brides (35c) adaptées pour être agencées au niveau des bords supérieurs respectifs (21c) de l'élément de canal (21),
- au moins une garniture (38) adaptée pour être interposée entre la partie interne (35) du joint (30) et la surface interne de l'élément de canal (21), et
- un moyen de serrage (39) agissant sur les brides (35c, 31c) pour serrer l'extrémité de l'élément de canal (21) entre la partie interne (35) et la partie externe (31) du joint (30),
dans laquelle la partie externe (31) du joint (30) a un siège (32) en forme de selle, adapté pour recevoir l'extrémité de l'élément de canal (21), et la partie interne (35) du joint (30) comprend une partie inférieure correspondante (35a) et une paire de parties latérales opposées (35b) s'étendant à partir de la partie inférieure (35a),
dans laquelle dans le siège (32) de la partie externe (31) du joint (30) est réalisée une cloison (33) s'étendant transversalement vers l'intérieur, ladite cloison définissant une position de référence pour l'extrémité de l'élément de canal (21),
ladite gouttière étant **caractérisée en ce que** sur la partie interne (35) du joint (30) sont réalisées une pluralité de parties de pont (37a, 37b) s'étendant entre les parties latérales (35b) de la partie interne (35), dans laquelle lesdites parties de pont comprennent une partie de pont (37a) et une partie de pont supérieure (37b), ladite partie de pont supérieure (37b) étant réalisée sous la forme d'une grille et servant de support à un élément de panneau (1a) du panneau d'évaporation (1).

2. Gouttière selon la revendication 1, comprenant en outre au moins une garniture adaptée pour être interposée entre la partie externe (31) du joint (30) et la surface externe de l'élément de canal (21).

3. Gouttière selon la revendication 1 ou 2, dans laquelle, sur chaque bride (35c) de la partie interne (35) du joint (30), une fente traversante d'inspection (35e) est réalisée, adaptée pour être placée au-dessus du bord supérieur respectif (21c) de l'élément de canal (21) pour fournir une confirmation visuelle du positionnement de l'extrémité de l'élément de canal (21) par rapport à la cloison (33).

4. Gouttière selon l'une des revendications précédentes, dans laquelle le joint (30) a une symétrie réfléchissante par rapport à un plan médian.

5. Gouttière selon l'une des revendications précédentes, dans laquelle les parois (21a, 21b) de l'élément de canal (21) sont réalisées sous la forme de doubles parois.

6. Gouttière selon l'une des revendications précédentes, comprenant en outre une série d'éléments de grille consécutifs (23) agencés le long de la gouttière (20) et reposant sur des bords supérieurs (21c) de l'au moins un élément de canal (21), lesdits éléments de grille agissant comme un support pour un élément de panneau (1a) du panneau d'évaporation (1).
